# FASCICULE DE BREVET EUROPEEN

(11) **EP 4 605 300 B1**
(45) Date de publication et mention de la délivrance du brevet: **02.09.2026**
(21) Numéro de dépôt: 23790342.2
(22) Date de dépôt: 18.10.2023
(51) Int. Cl.: B64B 1/62

(54) **AÉROSTAT COMPRENANT UN SYSTÈME DE CONTRÔLE DE LA PRESSION DU DIHYDROGÈNE CONTENU DANS SON ENCEINTE DE SUSTENTATION - PROCÉDÉ DE CONTRÔLE DE LA PRESSION ASSOCIÉ**
AEROSTAT MIT EINEM SYSTEM ZUR KONTROLLE DES DRUCKS DES IN SEINEM AUFTRIEBSRAUM ENTHALTENEN DIHYDROGENS - VERFAHREN ZUR KONTROLLE DES ZUGEHÖRIGEN DRUCKS
AIRSHIP COMPRISING A SYSTEM FOR CONTROLLING THE PRESSURE OF THE DIHYDROGEN CONTAINED IN ITS LIFT CHAMBER - ASSOCIATED PRESSURE CONTROL METHOD

(30) Priorité: 19.10.2022 FR 2210809
(43) Date de publication de la demande: 27.08.2025
(73) Titulaire: HyLight, 91220 Le Plessis-Pâté (FR)
(72) Inventeur: ROKUSEK, Josef, 01330 Le Plantay (FR); BOCKEN, Martin, 01330 Le Plantay (FR); HOENEN, Théo, 67170 Wingersheim les Quatre Bans (FR)
(74) Mandataire: Yes My Patent
(86) Numéro de dépôt international: PCT/EP2023/078904
(87) Numéro de publication internationale: WO 2024/083876

(56) Documents cités:
- CN-A- 113 060 271
- US-A1- 2013 193 266
- US-A1- 2014 374 537
- US-B2- 9 678 515

## Description

### Domaine technique

La présente invention concerne un aérostat comprenant une enceinte remplie de dihydrogène gazeux et des moyens de propulsion électriques alimentés par une pile à combustible fonctionnant au dihydrogène.

### Etat de la technique

Les aérostats ou ballons dirigeables étaient très utilisés au début du XX^{ème} siècle. Un aérostat comprend, de manière connue, une enceinte de sustentation contenant un gaz plus léger que l'air, laquelle est reliée mécaniquement à une nacelle apte à emporter des passagers et/ou des marchandises. Le volume de l'enceinte est déterminé de manière à ce que le volume de gaz contenu dans cette dernière soit suffisant pour soulever la nacelle selon le principe d'Archimède. Cette sustentation ne nécessite donc aucun apport d'énergie. L'aérostat ne nécessite un apport énergétique que pour alimenter ses moyens de propulsion. Ainsi, par rapport à un avion, un aérostat s'avère être plus sobre énergétiquement.

Le développement des aérostats a été freiné du fait des accidents survenus lorsque le gaz plus léger que l'air utilisé était le dihydrogène. Le dihydrogène pur n'est pas inflammable en revanche son mélange avec l'air le rend inflammable.

Par ailleurs, comme l'aérostat doit obligatoirement embarquer la source d'alimentation énergétique de ses moyens de propulsion, son autonomie est limitée du fait de son poids. Si l'on veut conserver une autonomie importante, il est nécessaire d'utiliser une enceinte de sustentation de grandes dimensions, ce qui créé d'autres problèmes techniques. Un aérostat est divulgué dans CN 113 060 271 A.

### Problèmes techniques résolus par l'invention

Un problème technique de l'invention est de proposer un aérostat comprenant une enceinte contenant du dihydrogène gazeux et qui présente une autonomie améliorée.

Un autre problème technique de l'invention est de proposer un aérostat comprenant une enceinte contenant du dihydrogène gazeux qui permet d'éviter les risques d'inflammation du dihydrogène.

### Résumé de l'invention

La présente invention concerne un aérostat du type comportant une enceinte de sustentation, remplie de dihydrogène gazeux, des moyens de propulsion électriques permettant la propulsion dudit aérostat et des moyens d'alimentation en électricité desdits moyens de propulsion.

De manière caractéristique, selon l'invention, lesdits moyens d'alimentation en électricité comportent au moins une pile à combustible utilisant le dihydrogène comme combustible réducteur, ledit aérostat comporte, en outre, au moins une réserve de dihydrogène, ladite réserve et/ou ladite enceinte de sustentation est/sont connectée(s) à ladite pile pour l'alimentation en dihydrogène de cette dernière, ledit aérostat comporte un système de contrôle de la pression du dihydrogène contenu dans ladite enceinte de sustentation, ledit système de contrôle est configuré pour maintenir positive la différence de pression entre l'intérieur de ladite enceinte et l'air extérieur à ladite enceinte de sustentation et ledit système de contrôle permet le passage du dihydrogène entre ladite enceinte et ladite réserve.

On constate ainsi que dans l'aérostat de l'invention, le dihydrogène sert à la fois à la sustentation et à la propulsion car il sert également de combustible à la pile électrique qui alimente les moyens de propulsion électriques. Le dihydrogène est plus léger que du carburant liquide ce qui améliore l'autonomie de l'aérostat de l'invention par rapport à un aérostat fonctionnant au carburant liquide.

Le système de contrôle de la pression dans l'enceinte de sustentation permet d'avoir toujours une surpression du dihydrogène gazeux dans l'enceinte par rapport à l'air ambiant. Il en résulte que l'air ne peut pas pénétrer dans l'enceinte et former un mélange inflammable. L'aérostat de l'invention est donc particulièrement fiable.

### Description détaillée

Avantageusement, ladite pile à combustible est connectée uniquement par ladite réserve de dihydrogène, ce qui rend plus facile le contrôle de la pression dans l'enceinte de sustentation. En effet, les modifications de la pression du dihydrogène gazeux dans l'enceinte ne sont pas dues à la consommation de la pile à combustible mais uniquement aux variations de la température et de la pression du fait de l'environnement extérieur à l'enceinte de sustentation.

L'enceinte de sustentation peut être une coque rigide ou être au moins partiellement formée d'une enveloppe déformable étanche aux gaz. De préférence, l'enceinte est formée d'une enveloppe déformable étanche aux gaz. Cette enveloppe permet de limiter le poids de l'enceinte et donc d'améliorer l'autonomie de l'aérostat.

La disposition de la réserve n'est pas limitée selon l'invention. Elle peut être dans la nacelle ou accrochée à l'enceinte. Avantageusement, ladite réserve de dihydrogène est disposée à l'intérieur de ladite enceinte ce qui facilite grandement le passage du dihydrogène de l'une à l'autre. Le passage est ainsi rapide et peut être fait sans dépense énergétique en utilisant les différences de pression entre l'enceinte et la réserve ou au moins une réserve quand l'aérostat comprend plusieurs réserves. De plus, en cas de fuite de la réserve, le dihydrogène ne part pas à l'extérieur de l'enceinte mais est récupéré dans cette dernière. Ceci limite les risques de fuite de dihydrogène dans l'environnement.

Selon un mode de réalisation particulier du système de contrôle de la pression dans ladite enceinte de sustentation, combinable avec chacun des modes de réalisation de l'invention, ce système de contrôle de la pression comporte des moyens de détermination de la pression de l'air extérieur à ladite enceinte de sustentation, des moyens de détection de la pression de dihydrogène dans ladite enceinte, des moyens permettant le passage du dihydrogène de ladite enceinte vers ladite réserve, des moyens permettant le passage du dihydrogène de ladite réserve vers ladite enceinte, un comparateur et des moyens de commande qui sont couplés auxdits moyens de détermination de la pression de l'air extérieur, auxdits moyens de détection de la pression dans ladite enceinte de sustentation, auxdits moyens permettant le passage du dihydrogène de ladite enceinte vers ladite réserve et/ou auxdits moyens permettant le passage du dihydrogène de ladite réserve vers ladite enceinte.

Les moyens de détermination de la pression extérieur à l'enceinte de sustentation peuvent, par exemple, être des moyens de mesure de la pression extérieure et comprendre, notamment un tube de Pitot disposé de manière à mesurer la pression totale de l'air extérieur. Ces moyens peuvent également être des moyens qui de manière indirecte permettent de déduire la pression extérieure en détectant son effet sur l'enceinte. Ainsi quand l'enceinte est déformable ou au moins partiellement déformable, ces moyens peuvent être des moyens de mesure de la tension de l'enveloppe déformable formant au moins partiellement l'enceinte ou des moyens de détection de la déformation de l'enveloppe.

Les moyens de passage de l'enceinte vers la réserve ou de la réserve vers l'enceinte peuvent comprendre indépendamment l'un de l'autre des moyens de compression, comme un compresseur par exemple. Une des réserves peut également être un récipient dépressurisé ce qui permet de faire passer du dihydrogène de l'enceinte vers cette réserve. Un récipient dépressurisé peut également être monté en amont d'une réserve et servir ainsi à stocker du dihydrogène en trop afin de réduire la pression dans l'enceinte. En fonction du volume de cette réserve dépressurisée ou du récipient dépressurisé, il est même possible de ne pas utiliser de compresseur pour des vols courts, lors desquels l'hydrogène contenu dans la réserve dépressurisée n'a pas à être comprimé pour être injecté dans la pile ou dans une autre réserve dont la pression est supérieure à celle de l'intérieur de l'enceinte de sustentation. Dans le cas où l'aérostat comprend un régulateur de pression monté en amont de l'entrée du circuit d'hydrogène de la pile à combustible, ce dernier peut servir à comprimer l'hydrogène provenant de la réserve dépressurisé vers la pile à combustible sans avoir besoin d'avoir recours à d'autres moyens de compression.

Selon un mode de réalisation particulier combinable avec chacun des autres modes de réalisation de l'invention, ladite réserve contient du dihydrogène à une pression supérieure à la pression du dihydrogène contenu dans ladite enceinte. Le dihydrogène peut être gazeux ou liquide. Il va changer d'état en fonction de la pression et de la température de l'atmosphère, lors des déplacements de l'aérostat. Cette configuration particulière permet d'augmenter la pression dans l'enceinte sans apport d'énergie extérieure, par simple différence de pression entre la réserve et l'enceinte.

Lorsque la pression de l'hydrogène dans la réserve est supérieure à celle de l'intérieur de l'enceinte, lesdits moyens permettant le passage du dihydrogène de ladite enceinte vers ladite réserve peuvent comporter des moyens de compression aptes à comprimer le dihydrogène contenu dans ladite enceinte et à l'injecter dans ladite réserve. Ces moyens de compression qui nécessitent un apport d'électricité sont utilisés pour faire baisser la pression dans l'enceinte comme expliqué ultérieurement en référence à l'exemple d'un mode de réalisation particulier de l'aérostat de l'invention.

Avantageusement, quel que soit le mode de réalisation, l'aérostat de l'invention comporte plusieurs réserves de dihydrogène aptes à communiquer entre elles. Ces réserves peuvent contenir du dihydrogène dans un état différent (gazeux ou liquide, voire supercritique). Elles peuvent contenir du dihydrogène à des pressions différentes. Une des réserves peut même être sous vide ou contenir du dihydrogène à une pression très faible. Elle sert alors à faire baisser la pression de dihydrogène dans l'enceinte en aspirant ce dernier lors de l'ouverture d'une vanne, par exemple. Une pluralité de réserves permet de facilement gérer simultanément l'alimentation de la pile et le contrôle de la pression dans l'enceinte. La ou les réserves peuvent être formées d'une enceinte rigide ou être formées d'une enveloppe déformable.

Avantageusement, quel que soit le mode de réalisation de l'invention, l'aérostat comporte également un régulateur de pression monté entre ladite enceinte/ladite réserve et ladite pile à combustible et permettant d'alimenter ladite pile à combustible avec du dihydrogène à pression constante. La présence de ce régulateur de pression disposé juste en amont de la pile à combustible permet de dissocier la gestion de la pression dans l'enceinte et la gestion de la pression d'approvisionnement de la pile.

Quel que soit le mode de réalisation, la pile à combustible est choisie parmi les piles à oxydes solides et les piles à membrane échangeuse de protons. L'aérostat peut également comporter plusieurs piles de type différents ou non.

Selon un mode de réalisation combinable avec chacun des modes de réalisation précités, l'enceinte de sustentation comporte une valve d'urgence apte à s'ouvrir pour libérer du dihydrogène dans l'atmosphère lors que la pression dans l'enceinte dépasse une valeur limite donnée. Cette valve évite tout risque de détérioration de l'enceinte sous l'effet d'une trop grande pression interne.

La présente invention concerne également un procédé de contrôle de la pression de dihydrogène contenu dans l'enceinte de sustentation d'un aérostat du type comportant des moyens de propulsion électriques permettant la propulsion dudit aérostat, des moyens d'alimentation en électricité desdits moyens de propulsion, qui comportent au moins une pile à combustible utilisant le dihydrogène comme combustible réducteur, au moins une réserve de dihydrogène gazeux, selon lequel on détermine la différence de pression ΔP entre l'intérieur de ladite enceinte et l'extérieur de ladite enceinte ainsi que la pression P_{E} dans ladite enceinte, si la valeur de ΔP est négative, on injecte du dihydrogène provenant de ladite réserve dans ladite enceinte de sustentation et si la valeur de la pression P_{E} dans ladite enceinte est supérieure à une valeur limite donnée P _{S}, on injecte du dihydrogène provenant de ladite enceinte dans ladite réserve.

Selon un mode de mise en œuvre particulier de ce procédé, la pression du dihydrogène dans ladite réserve étant supérieure à la pression dans ladite enceinte de sustentation, on comprime du dihydrogène de ladite enceinte avant son injection dans ladite réserve.

Selon un mode de mise en œuvre particulier, l'aérostat comporte plusieurs réserves de dihydrogène dont au moins une première réserve à une pression supérieure à la pression à l'intérieur de l'enceinte et au moins une deuxième réserve dont la pression est inférieure à celle de l'intérieur de l'enceinte, on injecte du dihydrogène dans ladite enceinte en mettant en communication ladite première réserve avec l'intérieur de ladite enceinte et on injecte du dihydrogène provenant de ladite enceinte dans ladite deuxième réserve en mettant en communication ladite deuxième réserve avec ladite enceinte.

### Définitions

Au sens de la présente invention, une vanne peut être une vanne commandée dont l'ouverture peut être régulée de manière à contrôler le débit de fluide la traversant ou une vanne à membrane fonctionnant automatiquement.

Le terme « remplie » en référence à l'enceinte indique que l'enceinte contient exclusivement le gaz indiqué, en l'occurrence du dihydrogène.

Les termes « différence de pression entre l'intérieur de l'enceinte et l'extérieur de l'enceinte » (ΔP) font référence à la différence entre la pression du dihydrogène dans l'enceinte et la pression de l'air à l'extérieur de l'enceinte ; cette dernière peut être la pression statique de l'air extérieur à l'enceinte ou la somme de la pression statique de l'air extérieur avec la pression dynamique laquelle est engendrée par le déplacement de l'aérostat dans l'air.

Les termes « pression totale » désignent la somme de la pression statique de l'air extérieur et de la pression dynamique laquelle est engendrée par le déplacement de l'aérostat dans l'air.

Le terme « aérostat » désigne un dispositif comportant une enceinte de sustentation et une nacelle apte à transporter des marchandises et/ou des passagers.

### Brève description des figures

Les caractéristiques et avantages de l'invention apparaîtront à la lecture de la description suivante s'appuyant sur la figure annexée.

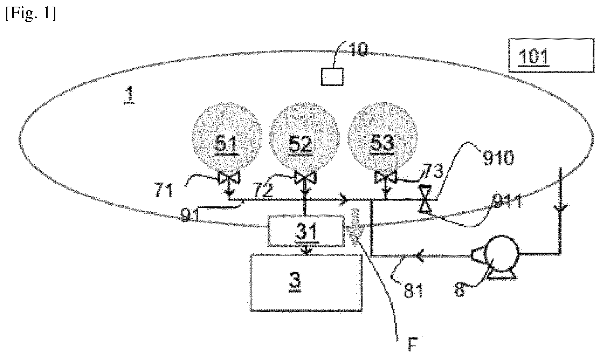

La [Fig.1] représente de manière schématique un mode de réalisation particulier de l'invention présenté à titre d'exemple non limitatif. ;

### Exemple

En référence à la [Fig.1], selon un mode de réalisation préféré de l'invention, l'aérostat comporte une enceinte de sustentation 1, laquelle est formée d'une enveloppe déformable imperméable aux gaz. La nacelle n'a pas été représentée par souci de simplification. L'aérostat comporte également une pile à combustible 3 qui permet d'alimenter en électricité les moyens de propulsion électriques (non représentés, par souci de simplification). L'enceinte de sustentation 1 contient ici, trois réserves de dihydrogène gazeux, 51, 52 et 53. Les trois réserves 51, 52, 53 sont chacune équipées au niveau de leur sortie d'une vanne commandée 71, 72 et 73. Les trois réserves 51, 52 et 53 sont connectées entre elles par une conduite 91 qui comporte une ouverture de sortie 910, laquelle débouche dans l'enceinte de sustentation 1. Une vanne commandée 911 est montée en amont de la sortie 910 de la conduite 91.

La conduite 91 est également connectée à un régulateur de pression 31. Ce régulateur de pression est connecté à l'entrée du circuit de dihydrogène de la pile à combustible 3.

L'intérieur de l'enceinte de sustentation 1 est connecté à un compresseur 8 dont la sortie est raccordée à la conduite 91 via une conduite 81 laquelle débouche en amont de la vanne 911.

Un capteur de pression 10 est disposé dans l'enceinte de sustentation 1. Ce capteur 10 ainsi que les vannes 71, 72, 73 et 911 et le compresseur 8 sont connecté à des moyens de commande 101 qui permettent de réguler l'ouverture des vannes précitées (et donc le débit de dihydrogène) et d'actionner ou non le compresseur 8.

L'aérostat est également équipé de moyens de mesure de la pression totale Ptde l'air environnant ladite enceinte 1. Ces moyens comprennent, par exemple, un tube de Pitot. Ils ne sont pas représentés sur la [Fig.1]. Le tube de Pitot est monté sur l'avant de la nacelle ou de l'enceinte 1 et est orienté dans le sens de déplacement de l'aérostat. Le système de contrôle de la pression dans ladite enceinte de sustentation 1 comprend également un comparateur.

Le fonctionnement du dispositif de la [Fig.1] va maintenant être expliqué en référence à cette même figure.

Le volume de l'enceinte de sustentation 1 et celui des réserves 51, 52 et 53 sont dimensionnées pour assurer à la fois la sustentation de l'aérostat et l'alimentation en dihydrogène de la pile à combustible 3 pendant toute la durée du vol. Les réserves 51, 52 et 53 sont remplies de dihydrogène gazeux ou liquide à une pression P_{R} toujours supérieure à la pression P_{E}régnant dans l'enceinte de sustentation 1 et donc toujours supérieure à la pression totale Pₜde l'air entourant la nacelle.

Au moment du départ de l'aérostat, la pile à combustible 3 est alimentée par du dihydrogène provenant d'au moins une des réserves 51 à 53. De préférence, à partir d'une seule des réserves 51 à 53. Le régulateur de pression 31 assure l'alimentation de la pile à combustible 3 à une pression constante en dihydrogène. La vanne 911 est fermée et le compresseur 8 est à l'arrêt.

Les moyens de commande 101 actionnent simultanément les moyens de mesure de la pression totale Pₜ de l'air et le capteur de pression 10 situé dans l'enceinte 1. Un comparateur qui fait partie du système de contrôle de la pression compare les deux valeurs et compare la valeur de la pression mesurée dans l'enceinte P_{E} avec une valeur seuil P_{S}. Cette valeur seuil est supérieure à la valeur de la pression totale Ptde l'air entourant l'enceinte 1. La valeur seuil P_{S} dépend notamment de la résistance mécanique de l'enveloppe souple formant l'enceinte ; elle est néanmoins inférieure à une valeur limite donnée P_{L}au-delà de laquelle l'enceinterisque d'être endommagée. Si le comparateur détecte que la différence de pression ΔP entre la pression P_{E} mesurée dans l'enceinte 1 et la valeur mesurée de la pression totale Pₜ est positive, les moyens de commande mesurent à nouveau les valeurs de pression P_{E} et Pₜ avec un pas de temps donné Δt. Si à t+ Δt, le comparateur détecte que la pression totale mesurée Pₜ est supérieure à la pression P_{E} mesurée dans l'enceinte 1 (Δ,P négative), les moyens de commande 101 déclenchent l'ouverture (avec régulation du débit) de la vanne 911 et éventuellement celle d'une des vannes 72 et 73 si celles-ci étaient fermées. Le dihydrogène contenu dans les réserves 51 à 53 étant sous pression par rapport à l'enceinte 1, il se déverse naturellement dans cette dernière et y augmente ainsi la pression. L'ouverture des vannes précitées est régulée par les moyens de commande 101 qui actionnent également le capteur 10. Le débit des vannes est régulé par les moyens de commande de manière à ce que la pression dans l'enceinte P_{E} devienne rapidement (sur un intervalle de temps inférieur à Δt) supérieure à la pression totale de l'air Pₜ.

Si à t+ Δt le comparateur détecte que la valeur mesurée de la pression dans l'enceinte P_{E} est supérieure à la valeur de seuil P_{S}, les moyens de commande 101 actionnent le compresseur 8 afin de pomper du dihydrogène de l'enceinte 1, de le comprimer et de l'injecter dans une ou plusieurs de réserves 51 à 53 tout en conservant la pression du dihydrogène dans l'enceinte 1 supérieure à la pression totale de l'air Pₜ. La pression P_{E} dans l'enceinte 1 est ainsi diminuée mais reste supérieure à celle de l'air environnant et le dihydrogène contenu dans les réserves 51 à 53 est maintenu sous pression.

Pendant la régulation de pression de l'enceinte P_{E}, l'alimentation de la pile à combustible 3 n'est pas stoppée et continue (comme indiqué par la flèche F), en parallèle de la sortie du dihydrogène des réserves 71 à 73 dans l'enceinte de sustentation 1 ou de l'injection sous pression du dihydrogène de l'enceinte 1 dans au moins une des réserves 51 à 53. Ceci est possible du fait le présence du régulateur de pression 31 montée entre les sorties des réserves 71 à 73 et l'entrée du circuit de dihydrogène de la pile à combustible 3.

Dans tous les cas, l'enceinte de sustentation est toujours remplie de dihydrogène à une pression supérieure à la pression totale de l'air entourant l'aérostat ; il n'y a donc aucun risque que de l'air extérieur ne pénètre dans l'enceinte 1 et donc aucun risque d'inflammation de l'aérostat.

Si la valeur mesurée ou déterminée de la pression dans l'enceinte P_{E} atteint une valeur limite donnée, la valve de sécurité s'ouvre afin de libérer rapidement du dihydrogène dans l'atmosphère.

## Revendications

1. Aérostat du type comportant une enceinte de sustentation (1), remplie de dihydrogène gazeux, des moyens de propulsion électriques permettant la propulsion dudit aérostat et des moyens d'alimentation en électricité desdits moyens de propulsion, lesdits moyens d'alimentation en électricité comportant au moins une pile à combustible (3) utilisant le dihydrogène comme combustible réducteur, ledit aérostat comportant, en outre, au moins une réserve de dihydrogène (51 ; 52 ; 53), ladite réserve (51 ; 52 ; 53) et/ou ladite enceinte de sustentation (1) étant connectée(s) à ladite pile (3) pour l'alimentation en dihydrogène de cette dernière, **caractérisé en ce que** ledit aérostat comporte un système de contrôle de la pression du dihydrogène contenu dans ladite enceinte de sustentation (1), **en ce que** ledit système de contrôle est configuré pour maintenir positive la différence de pression entre l'intérieur de ladite enceinte (1) et l'air extérieur à ladite enceinte de sustentation (1) et **en ce que** ledit système de contrôle permet le passage du dihydrogène entre ladite enceinte (1) et ladite réserve (51 ; 52 ; 53).

2. Aérostat selon la revendication 1, **caractérisé en ce que** ladite pile à combustible (3) est connectée uniquement par ladite réserve de dihydrogène (51 ; 52 ; 53).

3. Aérostat selon la revendication 1 ou 2, **caractérisé en ce que** ladite enceinte de sustentation (1) est au moins partiellement formée d'une enveloppe déformable étanche aux gaz.

4. Aérostat selon l'une quelconque des revendications précédentes, **caractérisé en ce que** ladite réserve de dihydrogène (51 ; 52 ; 53) est disposée à l'intérieur de ladite enceinte (1).

5. Aérostat selon l'une quelconque des revendications précédentes, **caractérisé en ce que** ledit système de contrôle de la pression système comporte des moyens de détermination de la pression de l'air extérieur à ladite enceinte de sustentation (1), des moyens de détection (10) de la pression de dihydrogène dans ladite enceinte (1), des moyens (8) permettant le passage du dihydrogène de ladite enceinte (1) vers ladite réserve (51 ; 52 ; 53), des moyens (71, 72, 73) permettant le passage du dihydrogène de ladite réserve (51 ; 42 ; 53) vers ladite enceinte (1), un comparateur et des moyens de commande (101) qui sont couplés auxdits moyens de détermination de la pression de l'air extérieur et auxdits moyens de détection de la pression dans ladite enceinte de sustentation (1), auxdits moyens permettant le passage du dihydrogène de ladite enceinte (1) vers ladite réserve (51 ; 52 ; 53) et/ou auxdits moyens permettant le passage du dihydrogène de ladite réserve (51 ; 42 ; 53) vers ladite enceinte (1).

6. Aérostat selon l'une quelconque des revendications précédentes, **caractérisé en ce que** ladite réserve (51 ; 52 ; 53) contient du dihydrogène à une pression supérieure à la pression du dihydrogène contenu dans ladite enceinte (1).

7. Aérostat selon l'une quelconque des revendications précédentes, **caractérisé en ce qu'**il comporte plusieurs réserves de dihydrogène (51 ; 52 ; 53) aptes à communiquer entre elles.

8. Aérostat selon l'une quelconque des revendications précédentes, **caractérisé en ce qu'**il comporte également un régulateur de pression (31) monté entre ladite enceinte (1)/ ladite réserve (51 ; 52 ; 53) et ladite pile à combustible (3) et permettant d'alimenter ladite pile à combustible (3) avec du dihydrogène à pression constante.

9. Procédé de contrôle de la pression de dihydrogène contenu dans l'enceinte de sustentation (1) d'un aérostat du type comportant des moyens de propulsion électriques permettant la propulsion dudit aérostat, des moyens d'alimentation en électricité desdits moyens de propulsion, qui comportent au moins une pile à combustible (3) utilisant le dihydrogène comme combustible réducteur, au moins une réserve de dihydrogène gazeux (51 ; 52 ; 53), **caractérisé en ce qu'**on détermine la différence de pression ΔP entre l'intérieur de ladite enceinte (1) et l'extérieur de ladite enceinte (1) ainsi que la pression P_{E} dans ladite enceinte (1), si la valeur de ΔP est négative, on injecte du dihydrogène provenant de ladite réserve (51 ; 52 ; 53) dans ladite enceinte de sustentation (1) et si la valeur de la pression P_{E} dans ladite enceinte (1) est supérieure à une valeur limite donnée P_{S}, on injecte du dihydrogène provenant de ladite enceinte (1) dans ladite réserve (51 ; 52 ; 53).

10. Procédé selon la revendication 9, **caractérisé en ce que** la pression du dihydrogène dans ladite réserve (51 ; 52 ; 53) étant supérieure à la pression dans ladite enceinte de sustentation (1) on comprime du dihydrogène de ladite enceinte (1) avant son injection dans ladite réserve (51 ; 52 ; 53).

## Patentansprüche

1. Luftfahrzeug des Typs umfassend eine Auftriebshülle (1), die mit gasförmigem Dihydrogen gefüllt ist, elektrische Antriebsmittel, die den Antrieb des Luftfahrzeugs ermöglichen, und Elektrizitätsversorgungsmittel für die Antriebsmittel, die Elektrizitätsversorgungsmittel umfassend mindestens eine Brennstoffzelle (3), die das Dihydrogen als reduzierenden Brennstoff verwendet, das Luftfahrzeug ferner umfassend mindestens einen Dihydrogenvorrat (51; 52; 53), wobei der Vorrat (51; 52; 53) und/oder die Auftriebshülle (1) mit der Zelle (3) für die Versorgung der Letzteren mit Dihydrogen verbunden sind,
**dadurch gekennzeichnet, dass** das Luftfahrzeug ein Steuersystem des Drucks des Dihydrogens, das in der Auftriebshülle (1) enthalten ist, umfasst, dadurch, dass das Steuersystem zum positiven Aufrechterhalten des Druckunterschieds zwischen dem Inneren der Hülle (1) und der Luft außerhalb der Auftriebshülle (1) konfiguriert ist, und dadurch, dass das Steuersystem den Durchgang von Dihydrogen zwischen der Hülle (1) und dem Vorrat (51; 52; 53) ermöglicht.

2. Luftfahrzeug nach Anspruch 1, **dadurch gekennzeichnet, dass** die Brennstoffzelle (3) ausschließlich durch den Dihydrogenvorrat (51; 52; 53) verbunden ist.

3. Luftfahrzeug nach Anspruch 1 oder 2, **dadurch gekennzeichnet, dass** die Auftriebshülle (1) mindestens teilweise aus einer gasdichten verformbaren Umhüllung ausgebildet ist.

4. Luftfahrzeug nach einem der vorstehenden Ansprüche,
**dadurch gekennzeichnet, dass** der Dihydrogenvorrat (51; 52; 53) im Inneren der Hülle (1) angeordnet ist.

5. Luftfahrzeug nach einem der vorstehenden Ansprüche,
**dadurch gekennzeichnet, dass** das Steuersystem des Systemdrucks Bestimmungsmittel des Drucks der Luft außerhalb der Auftriebshülle (1), Erfassungsmittel (10) des Dihydrogendrucks in der Hülle (1), Mittel (8), die den Durchgang des Dihydrogens von der Hülle (1) zu dem Vorrat (51; 52; 53) hin ermöglichen, Mittel (71, 72, 73), die den Durchgang des Dihydrogens von dem Vorrat (51; 42; 53) zu der Hülle (1) hin ermöglichen, einen Komparator und Steuerungsmittel (101), die mit den Bestimmungsmitteln des Drucks der Außenluft und mit den Erfassungsmitteln des Drucks in der Auftriebshülle (1), mit den Mitteln, die den Durchgang des Dihydrogens von der Hülle (1) zu dem Vorrat (51; 52; 53) hin ermöglichen, und/oder mit den Mitteln, die den Durchgang des Dihydrogens von dem Vorrat (51; 42; 53) zu der Hülle (1) hin ermöglichen, gekoppelt sind, umfasst.

6. Luftfahrzeug nach einem der vorstehenden Ansprüche,
**dadurch gekennzeichnet, dass** der Vorrat (51; 52; 53) Dihydrogen unter einem Druck enthält, der höher als der Druck des Dihydrogens ist, das in der Hülle (1) enthalten ist.

7. Luftfahrzeug nach einem der vorstehenden Ansprüche,
**dadurch gekennzeichnet, dass** es mehrere Dihydrogenvorräte (51; 52; 53) umfasst, die geeignet sind, miteinander in Verbindung zu stehen.

8. Luftfahrzeug nach einem der vorstehenden Ansprüche,
**dadurch gekennzeichnet, dass** es ferner einen Druckregler (31) umfasst, der zwischen der Hülle (1)/dem Vorrat (51; 52; 53) und der Brennstoffzelle (3) montiert ist, und der das Versorgen der Brennstoffzelle (3) mit Dihydrogen mit konstantem Druck ermöglicht.

9. Verfahren zum Steuern des Drucks von Dihydrogen, das in der Auftriebshülle (1) eines Luftfahrzeugs des Typs umfassend elektrische Antriebsmittel, die den Antrieb des Luftfahrzeugs ermöglichen, enthalten ist, Elektrizitätsversorgungsmittel für die Antriebsmittel, die mindestens eine Brennstoffzelle (3), die Dihydrogen als reduzierenden Brennstoff verwendet, und mindestens einen Vorrat an gasförmigem Dihydrogen (51; 52; 53) umfassen, **dadurch gekennzeichnet, dass** ein Druckunterschied ΔP zwischen dem Inneren der Hülle (1) und dem Äußeren der Hülle (1) sowie der Druck P_{E} in der Hülle (1) bestimmt wird, falls der Wert von ΔP negativ ist, Dihydrogen, das aus dem Vorrat (51; 52; 53) stammt, in die Auftriebshülle (1) eingeleitet wird, und falls der Wert des Drucks P_{E} in der Hülle (1) größer als ein gegebener Grenzwert P_{S} ist, Dihydrogen, das aus der Hülle (1) stammt, in den Vorrat (51; 52; 53) eingeleitet wird.

10. Verfahren nach Anspruch 9, **dadurch gekennzeichnet, dass** bei einem Druck des Dihydrogens in dem Vorrat (51; 52; 53), der höher als der Druck in der Auftriebshülle (1) ist, Dihydrogen aus der Hülle (1) vor seiner Einleitung in den Vorrat (51; 52; 53) komprimiert wird.

## Claims

1. Aerostat comprising a buoyancy chamber (1) filled with gaseous dihydrogen, electric propulsion means for propelling said aerostat, and means for supplying electricity to said propulsion means, said means for supplying electricity comprising at least one fuel cell (3) using the dihydrogen as a reductant fuel, said aerostat further comprising at least one dihydrogen reservoir (51; 52; 53), said reservoir (51; 52; 53) and/or said buoyancy chamber (1) being connected to said cell (3) to supply dihydrogen to the latter, **characterized in that** said aerostat comprises a control system for controlling the pressure of the dihydrogen, which control system is contained in said buoyancy chamber (1), **in that** said control system is configured to maintain a positive pressure difference between the inside of said chamber (1) and the air outside said buoyancy chamber (1) and **in that** said control system allows the dihydrogen to pass between said chamber (1) and said reservoir (51; 52; 53).

2. Aerostat according to claim 1, **characterized in that** said fuel cell (3) is connected solely via said dihydrogen reservoir (51; 52; 53).

3. Aerostat according to claim 1 or 2, **characterized in that** said buoyancy chamber (1) is at least partially formed by a deformable, gas-tight envelope.

4. Aerostat according to any of the preceding claims, **characterized in that** said dihydrogen reservoir (51; 52; 53) is arranged inside said chamber (1).

5. Aerostat according to any of the preceding claims, **characterized in that** said control system for controlling the system pressure comprises means for determining the pressure of the air outside said buoyancy chamber (1), means (10) for detecting the dihydrogen pressure in said chamber (1), means (8) allowing the dihydrogen to pass from said chamber (1) to said reservoir (51; 52; 53), means (71, 72, 73) allowing the dihydrogen to pass from said reservoir (51; 42; 53) to said chamber (1), a comparator and control means (101) which are coupled to said means for determining the pressure of the air outside and to said means for detecting the pressure in said buoyancy chamber (1), to said means allowing the dihydrogen to pass from said chamber (1) to said reservoir (51; 52; 53) and/or to said means allowing the dihydrogen to pass from said reservoir (51; 42; 53) to said chamber (1).

6. Aerostat according to any of the preceding claims, **characterized in that** said reservoir (51; 52; 53) contains the dihydrogen at a pressure greater than the pressure of the dihydrogen contained in said chamber (1).

7. Aerostat according to any of the preceding claims, **characterized in that** it comprises a plurality of dihydrogen reservoirs (51; 52; 53) capable of communicating with one another.

8. Aerostat according to any of the preceding claims, **characterized in that** it also comprises a pressure regulator (31) mounted between said chamber (1)/ said reservoir (51; 52; 53) and said fuel cell (3), and allowing said fuel cell (3) to be supplied with the dihydrogen at a constant pressure.

9. Method for controlling the dihydrogen pressure contained in the buoyancy chamber (1) of an aerostat comprising electric propulsion means for propelling said aerostat, means for supplying electricity to said propulsion means, which means for supplying electricity comprise at least one fuel cell (3) using the dihydrogen as a reductant fuel, at least one reservoir (51; 52; 53) for gaseous dihydrogen, **characterized in that** the pressure difference ΔP between the inside of said chamber (1) and the outside of said chamber (1), and the pressure P_{E} in said chamber (1), are determined; if the value of ΔP is negative, the dihydrogen from said reservoir (51; 52; 53) is injected into said buoyancy chamber (1), and if the value of the pressure P_{E} in said chamber (1) is greater than a given limit value P_{S}, the dihydrogen from said chamber (1) is injected into said reservoir (51; 52; 53).

10. Method according to claim 9, **characterized in that**, the pressure of the dihydrogen in said reservoir (51; 52; 53) being greater than the pressure in said buoyancy chamber (1), the dihydrogen from said chamber (1) is compressed prior to the injection thereof into said reservoir (51; 52; 53).
